# FASCICULE DE BREVET EUROPEEN

(11) **EP 4 204 731 B1**
(45) Date de publication et mention de la délivrance du brevet: **21.08.2024**
(21) Numéro de dépôt: 22703925.2
(22) Date de dépôt: 03.02.2022
(51) Int. Cl.: F16N 21/02

(54) **DISPOSITIF DE RACCORDEMENT DE GRAISSAGE MUNI D'UN EMBOUT DE GRAISSAGE ET D'UN PORTE-CODEUR D'IDENTIFICATION**
SCHMIERENDE ANSCHLUSSVORRICHTUNG MIT EINEM SCHMIERNIPPEL UND MIT EINEM HALTER FÜR EINEN IDENTIFIKATIONSGEBER
LUBRICATING CONNECTING DEVICE EQUIPPED WITH A GREASE NIPPLE AND WITH A HOLDER FOR AN IDENTIFICATION ENCODER

(30) Priorité: 03.02.2021 FR 2101041
(43) Date de publication de la demande: 05.07.2023
(73) Titulaire: NTN Europe, 74000 Annecy (FR)
(72) Inventeur: CROCHET, Nicolas, 74940 ANNECY LE VIEUX (FR); SENEPIN, Antoine, 74600 ANNECY (FR); VANDAMME, Etienne, 74540 ALLEVES (FR)
(74) Mandataire: Alatis
(86) Numéro de dépôt international: PCT/EP2022/052635
(87) Numéro de publication internationale: WO 2022/167549

(56) Documents cités:
- WO-A1-2013/135742
- DE-A1- 102019 111 095
- FR-A1- 2 732 445
- JP-A- 2004 132 531
- US-A1- 2019 107 249

## Description

### DOMAINE TECHNIQUE DE L'INVENTION

L'invention concerne, de façon générale, le domaine technique des dispositifs de raccordement de graissage.

L'invention se rapporte plus spécifiquement à un dispositif de raccordement de graissage du type muni d'un embout de graissage configuré pour être raccordé à une source d'alimentation externe en graisse, par exemple un pistolet de graissage, et d'un porte-codeur supportant un codeur à radiofréquences configuré pour être lu par un élément de lecture extérieur, associé ou non à la source d'alimentation externe en graisse. L'invention concerne également un système mécanique équipé d'un tel dispositif.

### ÉTAT DE LA TECHNIQUE ANTÉRIEURE

Des systèmes mécaniques du type roulement, palier ou rotule sont couramment intégrés à tous types d'équipements automobiles, ferroviaires, aéronautiques ou machines industrielles. De manière connue, un tel système mécanique est susceptible de subir des échauffements en fonctionnement. Au-dessus d'une température critique, certains éléments constitutifs du système peuvent être irrémédiablement endommagés. Le fonctionnement de l'équipement auquel le système est intégré est alors gêné, voire brutalement stoppé. Dans certains cas, un tel dysfonctionnement peut donc provoquer un accident grave. Afin d'empêcher ou ralentir l'échauffement des systèmes mécaniques, il est connu de nombreux dispositifs de lubrification.

Dans le cas du graissage d'un système mécanique, notamment pour permettre d'éviter des points de frottement, et préserver les pièces des attaques corrosives et de la rouille, il est connu d'utiliser un dispositif d'apport de lubrifiant, pouvant être de type pistolet de graissage. Un tel dispositif permet par exemple d'injecter de la graisse ou de réaliser une application ciblée de graisse dans de nombreux mécanismes. Des systèmes manuels aux équipements électriques ou pneumatiques, il existe différents modèles qui s'accordent avec des utilisations précises. La pompe à graisse est manipulée par un opérateur qui vient, lors d'une opération de graissage, se raccorder par une extrémité à un embout de graissage qui forme une interface de graissage. L'extrémité de raccordement de la pompe à graisse comprend par exemple une tige d'alimentation en graisse munie au niveau de son extrémité distale, d'une agrafe hydraulique permettant de venir se clipser à un téton de l'embout de graissage.

De telles opérations de graissage sont répétées régulièrement par l'opérateur et il existe un besoin d'identifier les embouts de graissage pour assurer une maintenance préventive et un bon suivi du graissage des systèmes mécaniques. Un exemple d'identification est décrit dans la demande de brevet US2019/107249 A1. Les technologies existantes amènent toutefois plusieurs problématiques.

L'utilisation d'un système d'identification impose de devoir nécessiter la mise en place d'un codeur et d'un élément de concordance au niveau de la pompe à graisse d'une part, et de l'embout de graissage d'autre part. Il existe toutefois une grande diversité d'embouts, présentant souvent un encombrement restreint tandis qu'il est recherché une solution à la fois pratique et facile à mettre en oeuvre.

Par ailleurs, selon sa configuration, l'expérience a montré que l'utilisation d'un tel système d'identification peut réduire les performances du raccordement, par exemple lors d'un raccordement par clipsage de l'agrafe hydraulique de la pompe à graisse sur le téton de l'embout de graissage.

L'utilisation de technologies sans-fil radiofréquences existe, mais présentent également des inconvénients. Par exemple, une fois que le raccordement de la pompe à graisse avec l'embout de graissage est effectué, des degrés de liberté de type liaison rotule sont généralement permis pour permettre une facilité d'utilisation pour l'opérateur lors des opérations de graissage. Toutefois, la lecture du codeur à radiofréquences par l'élément de concordance peut, selon les configurations, différer en fonction de l'orientation de la tige d'alimentation de la pompe à graisse avec l'embout de graissage, voire aussi limiter ces degrés de liberté qui apportent une souplesse d'utilisation pour l'opérateur.

Enfin, certaines configurations de systèmes d'identification ne conviennent pas aux environnements les plus sévères (BTP, Agriculture, Mines et Carrières). Un embout hydraulique sur-mesure est envisageable, mais peu souhaitable pour des problématiques de coûts et de facilité de réalisation.

### EXPOSE DE L'INVENTION

L'invention vise à remédier à tout ou partie des inconvénients de l'état de la technique en proposant notamment une solution permettant un raccordement fiable entre une source d'alimentation externe en graisse telle qu'une pompe à graisse avec l'embout de graissage, en permettant également une identification fiable pour assurer un bon suivi des opérations de graissages, qui soit résistante aux environnements les plus sérères, pratique et facile à mettre en oeuvre.

Pour ce faire est proposé, selon un aspect de l'invention, un dispositif de raccordement de graissage comprenant :
- un embout de graissage présentant une portion de fixation s'étendant suivant un axe de fixation, une interface d'entrée de graissage s'étendant suivant un axe de graissage, et une collerette positionnée entre l'interface d'entrée de graissage et la portion de fixation, la collerette présentant une face inférieure tournée axialement vers la portion de fixation, la face inférieure s'étendant dans un plan de référence de l'embout de graissage perpendiculaire à l'axe de fixation, l'interface d'entrée de graissage étant configurée pour être raccordée à une source d'alimentation externe en graisse, par exemple un pistolet de graissage,
- un porte-codeur portant un codeur à radiofréquences configuré pour être lu par un élément de lecture extérieur correspondant,
le dispositif de raccordement étant caractérisé en ce que le porte-codeur est traversé par un trou s'étendant axialement par rapport à l'axe de fixation et présentant une portée contre laquelle vient en butée la face inférieure de la collerette de l'embout de graissage, le porte-codeur présentant une empreinte dans laquelle vient se loger la collerette de l'embout de graissage.

Une telle combinaison de caractéristiques est particulièrement avantageuse en ce qu'elle permet de placer un codeur à radiofréquences porté par le porte-codeur rigide et qui puisse être situé sous les embouts de graissage les plus courants du commerce. De cette manière, l'accès à l'interface d'entrée de graissage, par exemple un téton de graissage, reste facilité pour les opérations de graissage, et pour assurer le bon raccordement de la source d'alimentation externe en graisse avec l'embout de graissage. Le codeur est ainsi maintenu par l'embout de graissage sans risquer de se déplacer ou bien de gêner le raccordement, quand bien même la source d'alimentation externe en graisse n'est pas alignée avec l'axe de graissage de l'embout de graissage. Le codeur à radiofréquences est par exemple un circuit apte à émettre un signal radiofréquence en utilisant comme énergie d'alimentation, l'énergie captée par une antenne. Le fait que le porte-codeur présente une empreinte dans laquelle vient se loger la collerette de l'embout de graissage permet d'obtenir un rapprochement relatif de l'interface d'entrée de graissage avec le porte-codeur, soit un rapprochement relatif dans une position de raccordement de la source d'alimentation externe en graisse avec le porte-codeur, c'est-à-dire avec le codeur lui-même. Ceci facilite la lecture du codeur par l'élément de lecture extérieur durant une opération de graissage.

Selon un mode de réalisation, la collerette de l'embout de graissage est logée dans l'empreinte du porte-codeur en étant en prise avec ladite empreinte pour permettre la transmission d'un couple autour de l'axe de fixation.

Selon un mode de réalisation, le codeur à radiofréquences comporte une antenne, reliée de préférence à une puce, une partie au moins de l'antenne étant positionnée à distance du plan de référence, d'un côté du plan de référence orienté vers l'interface d'entrée de graissage. Une telle caractéristique permet de réduire la distance minimum de lecture entre le codeur à radiofréquences, en particulier l'antenne, et une face extérieure du porte-codeur au niveau de laquelle l'empreinte est débouchante. Lorsqu'un opérateur effectue une opération de graissage, l'élément de lecture extérieur, associé ou non à la source d'alimentation externe en graisse, vient en vis-à-vis du porte-codeur, du côté de sa face extérieure, et peut donc être situé à une distance plus proche de l'antenne. La lecture du codeur à radiofréquences par l'élément de lecture est donc améliorée.

Selon un mode de réalisation, l'antenne est positionnée autour de l'axe de graissage, de préférence l'antenne entourant l'axe de graissage par exemple de façon annulaire, l'antenne étant positionnée dans un plan d'antenne perpendiculaire à l'axe de graissage. Dans une telle configuration, la lecture du codeur par l'élément de lecture peut être assurée de manière fiable et constante même si la source d'alimentation externe en graisse n'est pas alignée avec l'axe de graissage de l'embout de graissage. L'angle de raccordement alors existant peut varier sans impact sur la lecture du codeur par l'élément de lecture. La réalisation de la mesure effectuée ainsi que sa fiabilité sont donc assurées sans nécessiter de l'opérateur une précision particulière dans ses gestes. L'utilisation du pistolet de graissage est donc grandement simplifiée pour l'opérateur sans concession sur la précision de la mesure d'identification et en conservant une grande souplesse lors de son utilisation.

Selon un mode de réalisation, la face extérieure du porte-codeur est globalement contenue dans un plan parallèle au plan d'antenne. De cette manière, on garantit ainsi qu'en tout point pris autour de l'axe de graissage, la lecture du codeur par l'élément de lecture extérieur, par exemple associé à la source d'alimentation externe en graisse, peut être réalisée.

Selon un mode de réalisation, la collerette de l'embout de graissage présente une périphérie de forme non circulaire, par exemple polygonale, de préférence hexagonale. Une géométrie qui présente un contour extérieur non circulaire permet une prise facilitant l'application d'un couple lorsqu'il est souhaité faire tourner l'embout de graissage, dans un sens ou dans l'autre, notamment pour son vissage et son dévissage, au niveau de sa portion de fixation lorsqu'elle comprend notamment une portion filetée.

Selon un mode de réalisation, l'empreinte est délimitée radialement par une paroi latérale configurée pour être en prise avec la périphérie de la collerette de l'embout de graissage, par exemple par une forme complémentaire telle qu'une forme polygonale, par exemple hexagonale.

Selon un mode de réalisation, l'empreinte délimitée radialement par la paroi latérale présentant un contour fermé, comporte au moins deux faces, par exemple six faces, une partie au moins des faces, de préférence chacune des faces, présentant de préférence une surface convexe. Une telle convexité permet notamment de limiter les contacts aux arêtes vives des formes géométriques et limiter une usure prématurée des pièces.

Selon un mode de réalisation, des génératrices de toutes ou partie des faces, de préférence toutes les faces, de la paroi latérale de l'empreinte sont parallèles, et forment de préférence des portions de cylindres, ou forment des portions paraboloïdes, notamment de sphère. On notera que des génératrices parallèles, et notamment parallèles à l'axe de fixation, pour former des portions cylindriques permet de faciliter une étape de démoulage lors de la fabrication de la pièce.

Selon un mode de réalisation, l'empreinte du porte-codeur s'étend axialement suivant l'axe de fixation et présente des sections transversales constantes ou d'aire croissant avec l'éloignement par rapport au plan de référence. Dans le cas où l'aire est croissante avec l'éloignement par rapport au plan de référence, il est possible de rendre adaptable l'assemblage d'un porte-codeur à plusieurs dimensions de collerettes de différents embouts de graissage. Cette évolution de l'aire des sections transversales de l'empreinte du porte-codeur peut être continue, de sorte que sa paroi latérale forme par exemple une portion tronconique, ou discontinue, à la manière par exemple de marches d'escalier ou par palier.

Selon un mode de réalisation, la portée du porte-codeur présente une épaisseur définie par la distance entre le plan de référence et une face intérieure du porte-codeur, située d'un côté du plan de référence opposé à l'empreinte et tournée axialement dans le même sens que la face inférieure de la collerette, l'épaisseur de la portée étant inférieure à 50%, de préférence inférieure à 20%, d'une distance moyenne entre le codeur et le plan de référence. Cela permet de réduire l'encombrement du porte-codeur.

Selon un mode de réalisation, l'axe de graissage est colinéaire à l'axe de fixation. Une telle configuration correspond à un embout de graissage dit « droit ». Selon un mode de réalisation alternatif, l'embout de graissage est coudé de sorte que l'axe de graissage forme un angle avec l'axe de fixation. Dans ce cas on préfèrera un plan d'antenne perpendiculaire à l'axe de graissage, et de préférence encore une antenne colinéaire avec ledit axe de graissage pour garantir une mesure fiable.

Selon un mode de réalisation, le porte-codeur présente une interface configurée pour être en prise avec un outillage adapté pour lui appliquer un couple autour de l'axe de fixation. Une telle interface est choisie de préférence pour recevoir un outil correspondant qui soit particulièrement adapté et pratique pour son installation ou son entretien. Ainsi un opérateur peut manipuler le porte-codeur par un outil adapté au niveau de cette interface. Une telle géométrie peut varier de différentes manières selon l'outillage, la périphérie pouvant être par exemple une section axiale du contour extérieur non circulaire, par exemple : hexagonale, carré, en étoile, partiellement circulaire avec méplats ou encoches, etc. De manière complémentaire ou alternative, l'interface configurée pour être en prise avec l'outillage adapté peut également être située au niveau de l'une au moins des faces extérieure et/ou intérieure du porte-codeur.

En pratique, l'opérateur peut facilement avoir accès à l'interface du porte-codeur avec son outillage adapté et ainsi, en lui appliquant un couple, transmettre ce couple à l'embout de graissage et pour le visser ou le dévisser puisqu'en position assemblée, la périphérie de la collerette de l'embout de graissage vient de préférence en prise avec la paroi latérale de l'empreinte qui la délimite radialement.

Selon un mode de réalisation, l'embout de graissage est monobloc.

Selon un mode de réalisation, le porte-codeur est monobloc.

Selon un mode de réalisation, le codeur à radiofréquences est au moins partiellement en prise dans la matière constitutive du porte-codeur. Suivant un autre mode de réalisation, le codeur à radiofréquences peut également être logé dans une gorge du porte-codeur, la gorge étant de préférence débouchante par rapport à la face extérieure du porte-codeur au niveau de laquelle l'empreinte est débouchante, le codeur étant dans ce cas de préférence affleurant avec ladite face extérieure du porte-codeur.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue en perspective d'un dispositif de raccordement de graissage selon un mode de réalisation ;
[Fig. 1B] : une vue du porte-codeur du dispositif de raccordement de graissage selon le mode de réalisation de la figure 1A ;
[Fig. 1C] : une vue en perspective écorchée de la figure 1B ;
[Fig. 2] : une vue en perspective d'un porte-codeur selon un autre mode de réalisation ;
[Fig. 3] : une vue en perspective d'un porte-codeur selon un autre mode de réalisation ;
[Fig. 4A] : une vue en perspective d'un porte-codeur selon un autre mode de réalisation ;
[Fig. 4B] : une vue de dessus du porte-codeur illustré sur la figure 4A ;
[Fig. 5A] : une vue en perspective d'un porte-codeur selon un autre mode de réalisation ;
[Fig. 5B] : une vue de dessus du porte-codeur illustré sur la figure 5A ;
[Fig. 6] : une vue en perspective d'un porte-codeur selon un autre mode de réalisation ;
[Fig. 7] : une vue en perspective d'un porte-codeur selon un autre mode de réalisation ;
[Fig. 8] : une vue en perspective d'un porte-codeur selon un autre mode de réalisation ;
[Fig. 9] : une vue en perspective d'un porte-codeur selon un autre mode de réalisation ;
[Fig. 10] : une vue en perspective d'un porte-codeur selon un autre mode de réalisation ;
[Fig. 11] : une vue en perspective d'un porte-codeur selon un autre mode de réalisation ;
[Fig. 12] : une vue en perspective d'un porte-codeur selon un autre mode de réalisation ;
[Fig. 13A] : une vue en perspective de dessus d'un dispositif de raccordement de graissage selon un autre mode de réalisation ;
[Fig. 13B] : une vue en perspective de dessous du dispositif de raccordement de graissage selon le mode de réalisation de la figure 13A ;
[Fig. 13C] : une vue du porte-codeur du dispositif de raccordement de graissage selon le mode de réalisation de la figure 13A ;
[Fig. 13D] : une vue en coupe simplifiée du dispositif de raccordement de graissage selon le mode de réalisation de la figure 13A ;
[Fig. 14A] : une vue en perspective de dessus d'un dispositif de raccordement de graissage selon un autre mode de réalisation ;
[Fig. 14B] : une vue de dessous de la figure 14A ;
[Fig. 14C] : une vue de côté de la figure 14A ;
[Fig. 14D] : une vue en coupe simplifiée A-A de la figure 14B ;
[Fig. 15A] : une vue en perspective de dessus d'un dispositif de raccordement de graissage selon un autre mode de réalisation ;
[Fig. 15B] : une vue de dessous de la figure 15A ;
[Fig. 15C] : une vue de côté de la figure 15A;
[Fig. 15D] : une vue en coupe simplifiée B-B de la figure 15B.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

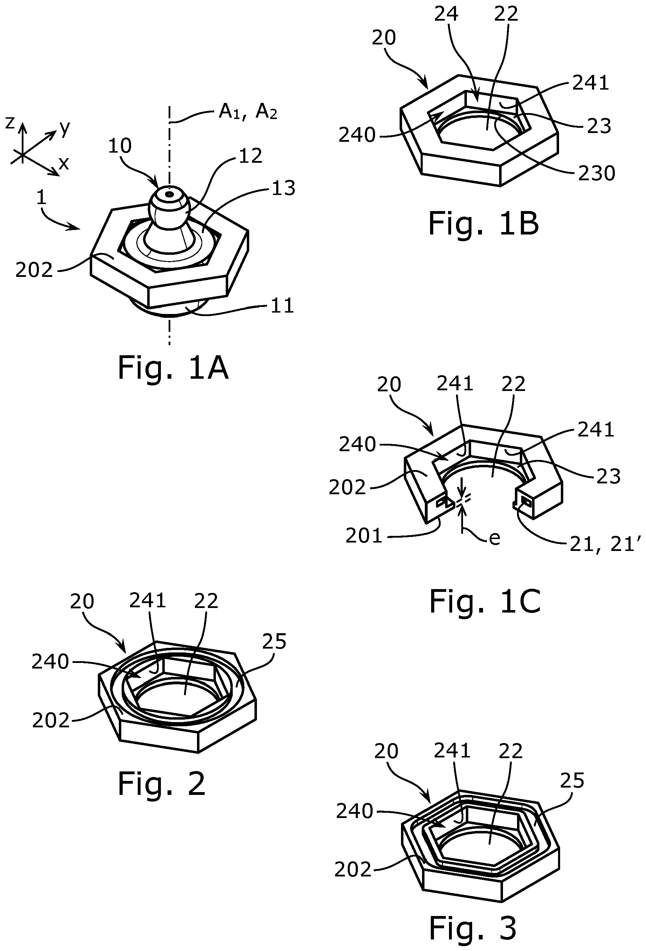

La [fig.1] illustre un dispositif de raccordement de graissage **1** destiné à former une interface d'un réseau de lubrification, tel que par graissage, d'un système mécanique (non illustré). Une telle interface est notamment utilisée par des opérateurs pour venir y raccorder temporairement et régulièrement une source d'alimentation externe en graisse, par exemple un pistolet de graissage, afin d'y injecter de la graisse lors d'opération de maintenance ou d'entretien notamment.

Le dispositif de raccordement de graissage **1** comporte un embout de graissage **10** muni d'un côté d'une portion de fixation **11** comportant en particulier ici une portion filetée (filetage non illustré, les dessins étant schématiques) pour assurer une fixation par vissage s'étendant suivant un axe de fixation **A1,** ou axe de vissage, parallèle à l'axe vertical **Z** sur les figures, et permettant son propre raccordement au niveau d'un taraudage correspondant du réseau de lubrification. L'embout de graissage **10** comprend également une interface d'entrée de graissage **12,** en particulier ici formée par un téton de graissage **12,** configurée pour être raccordée à une source d'alimentation externe en graisse (non illustrée), par exemple un pistolet de graissage. Dans d'autres modes de réalisations (non illustrés), l'interface d'entrée de graissage **12** peut être formée par une tête plate ou à calottes. L'embout de graissage **10** s'étend suivant un axe de graissage **A2,** et est disposé d'un autre côté, de préférence opposé à la portion de fixation **11** filetée. Dans ce mode de réalisation, l'embout de graissage **10** est dit « droit » du fait que l'axe de graissage **A2** est colinéaire à l'axe de fixation **A1.** Alternativement, on notera que la portion de fixation pourrait également être frettée au lieu d'être vissée pour assurer le raccordement de l'embout de graissage **10** au réseau de lubrification.

L'embout de graissage **10** comprend une collerette **13** positionnée entre l' interface d'entrée de graissage **12** et la portion de fixation **11** filetée. La collerette **13** est orientée axialement par rapport à l'axe de fixation **A1.** La collerette **13** est délimitée axialement par une face inférieure **131** et une face extérieure **132** opposée délimitant ensemble son épaisseur. La face inférieure **131** est tournée axialement vers la portion de fixation**11** filetée et s'étend dans un plan de référence **P** de l'embout de graissage **10** perpendiculaire à l'axe de de fixation **A1.**

Dans ce mode de réalisation, l'embout de graissage **10** est métallique et formé monobloc, c'est-à-dire d'un seul tenant. Une composition en tout ou partie métallique, de préférence intégralement métallique, permet une meilleure résistance aux efforts. De préférence, l'embout de graissage **10,** notamment l'interface d'entrée de graissage **12,** peut être pourvu d'un clapet anti-retour, par exemple au moyen d'une bille et d'un ressort logé dans un alésage qui traverse l'embout de graissage **10** de part en part suivant l'axe de graissage **A2.**

Le dispositif de raccordement de graissage **1** comporte également un porte-codeur **20** configuré pour être rapporté sur l'embout de graissage **10,** le porte-codeur **20** portant un codeur **21** à radiofréquences configuré pour être lu par un élément de lecture extérieur, qu'il soit associé à la source d'alimentation externe en graisse, ou pas : par exemple le codeur **21** à radiofréquences pourrait être lu par un élément extérieur tel qu'un smartphone. Par « porter » le codeur **21,** on comprend que le codeur **21** à radiofréquences peut être supporté par le porte-codeur **20** ou intégré au porte-codeur **20.**

Les figures **1B** et **1C** illustrent des vues détaillées du porte-codeur **20** de la [fig.1A]. Le porte-codeur **20** est pourvu d'un trou **22** traversant s'étendant axialement par rapport à l'axe de fixation **A1** configuré de sorte à pouvoir être traversé par l'embout de graissage **10** d'une part, et à y loger une partie au moins de la portion dudit embout de graissage **10** formant collerette **13.** Le trou **22** du porte-codeur **20** comprend une portée **23** contre laquelle vient en butée la face inférieure **131** de la collerette **13** de l'embout de graissage **10.**

La portion du trou **22** recevant la collerette **13** est délimitée par une empreinte **24** dans laquelle vient se loger la collerette **13.** En particulier ici, en prise la collerette **13** vient en prise dans l'empreinte **24** pour permettre la transmission d'un couple autour de l'axe de fixation **A1.** De cette manière, une fois la collerette **13** insérée ou engagée au moins en partie dans l'empreinte **24,** la rotation de l'une des pièces parmi la collerette **13** ou l'empreinte **24,** permet d'entraîner la rotation de l'autre desdites pièces. Dans ce mode de réalisation, la collerette **13** présente une périphérie de forme non circulaire, en particulier polygonale du type hexagonal. Cette périphérie radiale délimitant le contour extérieur de la collerette **13** est configurée pour venir s'engager dans l'empreinte **24** de forme complémentaire. En effet, l'empreinte **24** est délimitée radialement par une paroi latérale **240** présentant un contour fermé muni d'une pluralité de faces **241,** notamment six faces **241** de sorte que l'empreinte **24** présente une section axiale par rapport à l'axe de vissage **A1** qui est hexagonale.

Dans ce mode de réalisation, l'empreinte **24** du porte-codeur **20** s'étend axialement suivant l'axe de fixation **A1** et présente une section transversale constante : les faces **241** de la paroi latérale **240** sont générées par une génératrice rectiligne parallèle à l'axe de fixation **A1** suivant une ligne directrice polygonale fermée, en particulier ici hexagonale.

Le porte-codeur **20** peut être fixé de différentes manières avec l'embout de graissage **10.** Par exemple, le porte-codeur **20** peut être maintenu par l'embout de graissage **10** ensemble avec une face d'appui extérieure (non illustrée) au niveau du réseau de lubrification, notamment aux abords d'une extrémité du taraudage recevant la portion de fixation **11** filetée de l'embout de graissage **10** : dans ce cas la portée **23** est prise en étau ou prise en sandwich entre d'une part la face inférieure **131** de la collerette **13** en appui d'un côté de la portée **23,** et d'autre part la face d'appui extérieure d'une pièce où vient se visser ou plus généralement se fixer l'embout de graissage **10.** Dans un mode de réalisation distinct une face annulaire **230** de la portée **23** délimitant le trou **22** peut être configurée pour être fixée directement sur l'embout de graissage **10,** par exemple par vissage par coopération de la portion de fixation **11** filetée avec une portion taraudée de la face annulaire **230,** ou par exemple encore par frettage d'une portion annulaire de l'embout de graissage **10,** par exemple dans le prolongement axial de la portion filetée **11** de l'embout de graissage **10,** avec la face annulaire **230** de la portée **23.**

Le codeur **21** à radiofréquences comporte une antenne **21'** conçue pour émettre un signal radiofréquences et fonctionner dans une bande de fréquence donnée, l'antenne **21'** étant généralement connectée à une puce électronique (non illustrée), qui stocke les données. Un tel codeur **21** à radiofréquences est communément appelé « tag RFID » ou « étiquette RFID ». Une partie au moins de l'antenne **21'** est positionnée à distance du plan de référence **P**, d'un côté du plan de référence orienté vers l'interface d'entrée de graissage **12.** Le codeur **21,** ici l'antenne **21',** est disposé de sorte à entourer complètement l'embout de graissage **10,** de préférence de manière annulaire, et est positionnée autour de l'axe de graissage **A2,** dans un plan d'antenne **P21** perpendiculaire à l'axe de graissage **A2.**

Dans ce mode de réalisation, le porte-codeur **20** est formé à partir de matériau(x) polymère(s), et/ou de résine(s) et/ou de matériau(x) céramique(s), et de préférence formée monobloc. Le porte-codeur **20** peut être en plusieurs matières en étant monobloc. Une telle composition permet d'assurer un bon support du codeur **21** à radiofréquences tout en limitant les interactions avec la lecture des informations. Le porte-codeur **20** étant situé en arrière de l'interface d'entrée de graissage **12** pendant l'opération de graissage, un tel porte-codeur **20** confère à la fois une structure relativement rigide pour maintenir le codeur, sans nécessiter une résistance comparable à celle de l'embout de graissage **10** car il n'est pas sollicité mécaniquement par le pistolet de graissage.

Comme illustré sur la [fig.1C], le codeur **21** est noyé dans la matière constitutive du porte-codeur **20** lors de sa fabrication. Une telle configuration protège de façon optimale le codeur d'une éventuelle usure prématurée tout en étant facile à fabriquer, et à remplacer au besoin via le remplacement du porte-codeur **20.**

La portée **23** présente une épaisseur **e** définie par la distance entre le plan de référence **P** et une face intérieure **201** du porte-codeur **20** située d'un côté du plan de référence **P** opposé à l'empreinte **24** et tournée axialement dans le même sens que la face inférieure **131** de la collerette **13.** Pour diminuer l'encombrement du porte-codeur **20,** on choisira la portée **23** de sorte que son épaisseur e soit inférieure à **50**%, de préférence inférieure à **20**%, d'une distance moyenne entre le codeur **21** à radiofréquences et le plan de référence **P.**

En outre, dans ce mode de réalisation, le porte-codeur **20** présente une interface configurée pour être en prise avec un outillage adapté pour lui appliquer un couple autour de l'axe de fixation **A1.** En particulier, s'agissant du mode de réalisation illustré sur les figures **1A, 1B** et **1C****,** le porte-codeur **20** présente un contour extérieur de section hexagonale. De cette manière, le porte-codeur **20** peut être entraîné en mouvement de rotation par l'intermédiaire d'une clé associée. L'application d'un moment sur le porte-codeur **20** au niveau de son contour extérieur entraîne la rotation de son empreinte **24,** qui elle-même entraîne en rotation la collerette **13,** et donc le vissage ou le dévissage de l'embout de graissage **10** suivant son sens de rotation.

Le dispositif de raccordement de graissage **1** tel que décrit permet donc de répondre aux problématiques soulevées par l'art antérieur et présente aussi l'avantage de pouvoir équiper à la fois de nouveaux dispositifs de lubrification, mais aussi des dispositifs préexistants. Il suffit dans ce cas d'équiper un embout de graissage **10** déjà existant par un porte-codeur **20.**

Les figures **2** à **12** illustrent des variantes de réalisation d'un porte-codeur **20.**

Les figures **2** et **3** illustrent en particulier un porte-codeur **20** qui diffère du porte-codeur illustré sur les figures **1B** et **1C** essentiellement en ce que le codeur **21** n'est cette fois pas surmoulé dans la matière constitutive du porte-codeur **20,** mais est configuré pour venir se loger dans une gorge **25** du porte-codeur **20.** La gorge **25** est de préférence débouchante par rapport à la face extérieure **202** du porte-codeur **20** au niveau de laquelle l'empreinte **24** est débouchante. On pourra choisir une disposition dans laquelle le codeur **21** à radiofréquences est affleurant avec ladite face extérieure **202** du porte-codeur **20** de sorte à permettre d'amener le codeur **21** à radiofréquences le plus avancé possible par rapport au porte-codeur **20** et ainsi faciliter la lecture de l'antenne **21'** du codeur **21** à radiofréquences par l'élément de lecture extérieur associé à la source d'alimentation externe en graisse grâce à la minimisation de la distance les séparant. Pour assurer le maintien fixe de l'antenne **21'** dans la gorge **25** et la protéger d'une usure prématurée, le codeur **21** à radiofréquences est noyé dans une résine remplissant la gorge **25.** La gorge **25** peut suivre un contour fermé autour de l'axe de graissage **A2** qui peut présenter une forme différente : elle peut être circulaire ([fig.2]) ou bien suivre la même géométrie que le contour de l'empreinte **24** et/ou celui de la périphérie extérieure du porte-codeur **20,** par exemple hexagonale ([fig.3]).

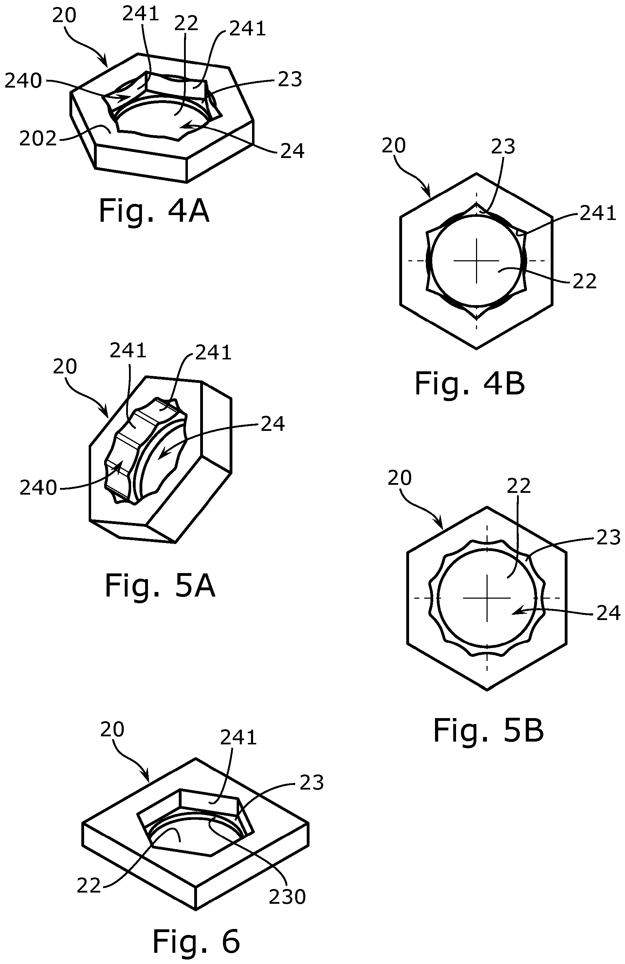

Les figures **4A** et **4B** illustrent un porte-codeur **20** qui diffère du porte-codeur illustré sur les figures **1B** et **1C** essentiellement en ce que les faces **241** de la paroi latérale **240** présentant un contour fermé délimitant radialement l'empreinte **24** présentent chacune une surface convexe, en lieu et place d'une surface plane. En particulier les faces **241** sont configurées de sorte que des génératrices de toutes les faces **241** de la paroi latérale **240** de l'empreinte **24** forment des portions de sphère.

Les figures **5A** et **5B** illustrent un porte-codeur **20** qui diffère du porte-codeur illustré sur les figures **1A** à **1C** essentiellement en ce que l'empreinte **24** est délimitée radialement par une paroi latérale **240** présentant un contour fermé muni de douze faces **241.** Les douze faces **241** de la paroi latérale **240** sont égales ne sont ici pas planes, mais courbes, chacune des faces **241** présente une surface convexe. Elles sont générées par une génératrice parallèle à l'axe de fixation **A1** par vissage suivant une ligne directrice fermée suivant douze côtés égaux, chaque côté suivant la forme d'une courbe convexe.

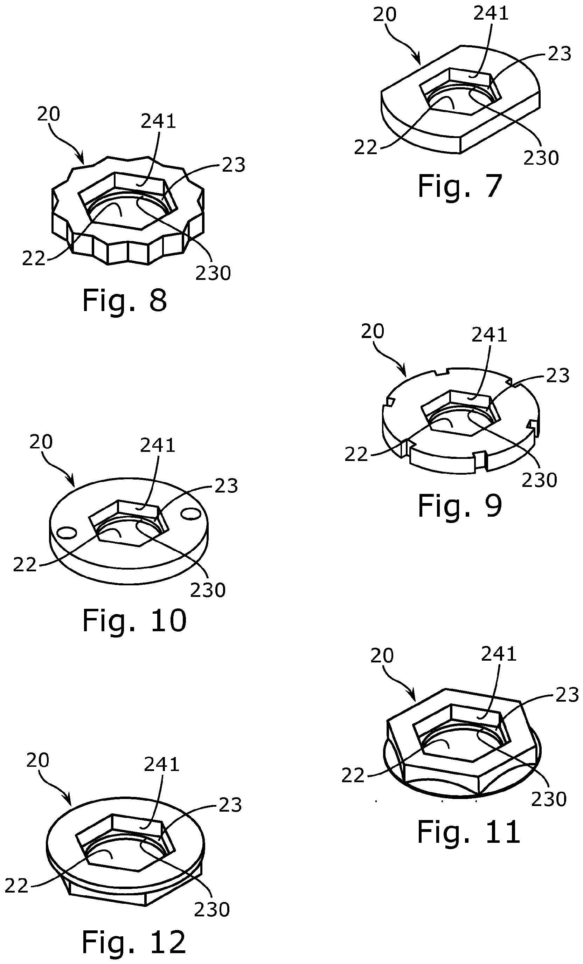

Les figures **6****,** **7, 8, 9** et **10** illustrent en particulier des portes-codeurs **20** qui diffèrent du porte-codeur illustré sur les figures **1A** à **1C** essentiellement en ce qu'ils présentent chacun une interface extérieure configurée pour être en prise avec un outillage adapté pour lui appliquer un couple autour de l'axe de fixation **A1** qui est différente des autres modes de réalisation. En particulier, s'agissant du mode de réalisation illustré sur la [fig.6], le porte-codeur **20** présente un contour extérieur de section carrée. Sur la [fig.7], le porte-codeur **20** présente un contour extérieur dont la section s'étend suivant une enveloppe circulaire et est munie de deux méplats. Sur la [fig.8], le porte-codeur **20** présente un contour extérieur de section polygonale en forme d'étoile à douze branches, soit vingt-quatre côtés. Sur la [fig.9], le porte-codeur **20** présente un contour extérieur dont la section s'étend suivant une enveloppe circulaire et est munie de plusieurs encoches réparties sur sa circonférence de façon régulière, en particulier six encoches, lui permettant d'être entraîné en rotation par une clé à ergot. Sur la [fig.10], le porte-codeur **20** présente une section circulaire, l'interface configurée pour être en prise avec l'outillage adapté étant située sur sa face supérieure **202** et comporte deux orifices à l'intérieur desquels un ergot d'une clé à ergot peut se loger. Ces deux orifices sont disposés de façon symétrique par rapport à l'axe de fixation **A1.**

Les figures **11** et **12** illustrent un porte-codeur **20** qui présente dont à la fois l'empreinte **24** et le contour extérieur qui sont hexagonaux, formant ainsi une couronne polygonale, en particulier ici hexagonale. Ces deux modes de réalisations diffèrent du porte-codeur **20** illustré sur les figures **1A** à **1C** essentiellement en ce que cette couronne présente, à l'une de ses deux extrémités axiales inférieure (voir la [fig.11]) et supérieure (voir la [fig.12]), un élargissement de matière constitutive du porte-codeur **20.** De cette manière, il est particulièrement simple de pouvoir disposer par exemple une antenne **21'** annulaire avec un profil de porte-codeur de forme polygonale tel qu'en forme de couronne hexagonale. Il est ainsi possible de réduire l'encombrement du porte-codeur **20** tout en bénéficiant d'un périmètre et d'une surface plus grande pour simplifier l'intégration de l'antenne et/ou pour intégrer une antenne plus grande, améliorant alors la portée de ladite antenne.

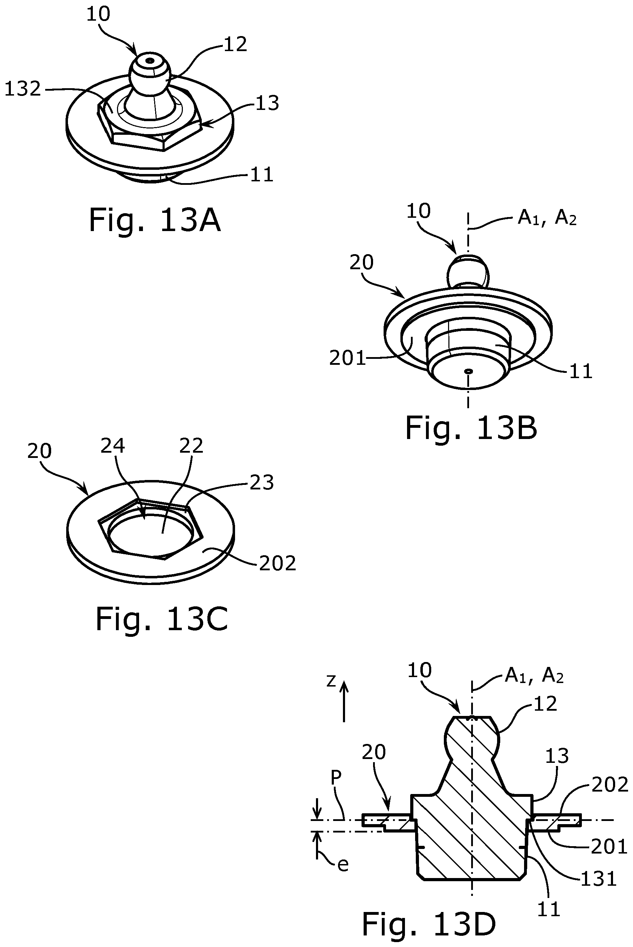

Les figures **13A, 13B, 13C** et **13D** illustrent un dispositif de raccordement de graissage **1** selon un autre mode de réalisation qui diffère essentiellement du mode de réalisation des figures **1A, 1B** et **1C** en ce que l'interface extérieure du porte-codeur **20** n'est cette fois pas configurée pour être en prise avec un outillage adapté pour lui appliquer un couple autour de l'axe de fixation **A1.** Au contraire, le porte-codeur **20** présente un contour extérieur dont la section est circulaire. Par ailleurs, aucune des faces supérieure **202** et inférieure **201** n'est munie d'une interface configurée pour être entraînée par un outil particulier. Dans ce mode de réalisation le porte-codeur **20** présente une épaisseur axiale par rapport à l'axe de fixation **A1** définie entre ses faces supérieure **202** et inférieure **201.** Dans ce cas, l'épaisseur axiale du porte-codeur **20** est de préférence inférieure, de préférence encore inférieure à 50%, à l'épaisseur axiale de la collerette **13.** On garantit ainsi que l'intégralité de la collerette **13** n'est pas longée dans l'empreinte **24** du porte-codeur **20.** L'opérateur conserve donc un accès à la collerette **13** pour venir positionner un outil adapté directement en prise avec la géométrie extérieure de ladite la collerette **13.** Le serrage et le desserrage sont donc possibles directement via l'embout de graissage **10.** Alternativement, on peut configurer le dispositif de raccordement de graissage **1** de sorte que l'épaisseur axiale du porte-codeur **20** est supérieure, de préférence encore supérieure à 50%, à l'épaisseur axiale de la collerette **13.** Dans une telle configuration, cela permet de rapprocher l'antenne **21'** d'une alimentation externe de graissage, et donc d'obtenir une meilleure mesure d'identification.

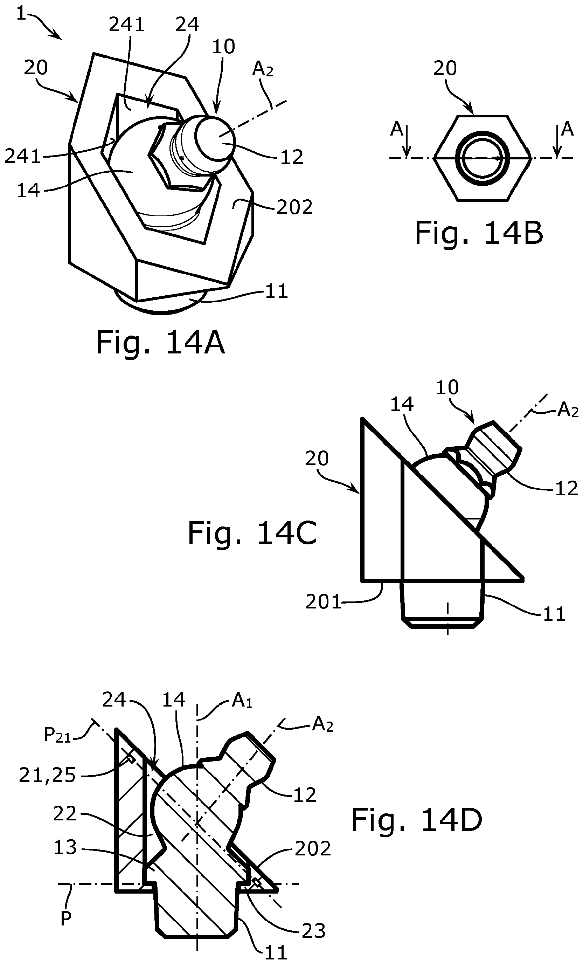

Les figures **14A, 14B, 14C** et **14D** illustrent un dispositif de raccordement de graissage **1** selon un autre mode de réalisation qui diffère essentiellement du mode de réalisation des figures **1A, 1B** et **1C** en ce que l'embout de graissage **10** est coudé de sorte que l'axe de graissage **A2** est incliné par rapport à l'axe de fixation **A1,** ces deux axes **A1, A2** étant par ailleurs sécants. L'inclinaison des axes **A1, A2** dans ce mode de réalisation est de 45 degrés.

L'embout de graissage **10** comprend au moins une première partie composée de la portion de fixation **11** filetée, la collerette **13** et d'une tête de coudage **14** présentant une forme globalement sphérique, cette partie étant alignée suivant l'axe de fixation **A1.** Une deuxième partie de l'embout de graissage **10** comporte notamment l'interface d'entrée de graissage **12,** voir éventuellement d'une collerette intermédiaire, située à proximité directe sous l'interface d'entrée de graissage **12.** Ces deux première et deuxième parties sont ici amovibles l'une par rapport à l'autre, la collerette intermédiaire permettant le vissage d'une portion d'ancrage telle qu'une portion filetée intermédiaire est configurée pour venir se visser dans un trou taraudé de la tête de coudage **14.** Alternativement encore, le vissage des première et deuxième parties peut être remplacé par un frettage.

Afin de garantir la lecture du codeur lorsque l'opérateur effectue une opération de graissage, et malgré l'inclinaison de l'axe de graissage **A2,** le porte-codeur **20** est configuré de sorte que le codeur **21** à radiofréquences, i.e. ici son antenne **21',** est positionné à distance du plan de référence **P**, du côté du plan de référence orienté vers l'interface d'entrée de graissage **12.** En particulier le codeur **21** à radiofréquences est positionné autour de l'axe de graissage **A2,** dans un plan d'antenne **P21** perpendiculaire à audit axe de graissage **A2.** Il en résulte que le plan d'antenne **P21** est incliné par rapport au plan de référence **P.** La face extérieure **202** du porte-codeur est située dans un plan globalement parallèle au plan d'antenne **P21** afin de garantir une distance minimale de lecture qui soit régulière tout autour de l'axe de graissage **A2.**

La portée **23** du porte-codeur **20** présente une épaisseur **e** définie par la distance entre le plan de référence **P** et une face intérieure **201** du porte-codeur **20,** située d'un côté du plan de référence **P** opposé à l'empreinte **24** et tournée axialement dans le même sens que la face inférieure **131** de la collerette **13,** l'épaisseur **e** de la portée **23** étant inférieure à 50%, de préférence inférieure à 20%, d'une distance moyenne entre le codeur **21** à radiofréquences et le plan de référence **P.** Cela permet de réduire l'encombrement du porte-codeur **20.** Le plan d'antenne **P21** étant incliné par rapport au plan de référence **P**, il en résulte une distance variable entre le codeur **21** à radiofréquences et le plan de référence **P**, dont la distance moyenne est calculée entre sa distance minimale et sa distance maximale.

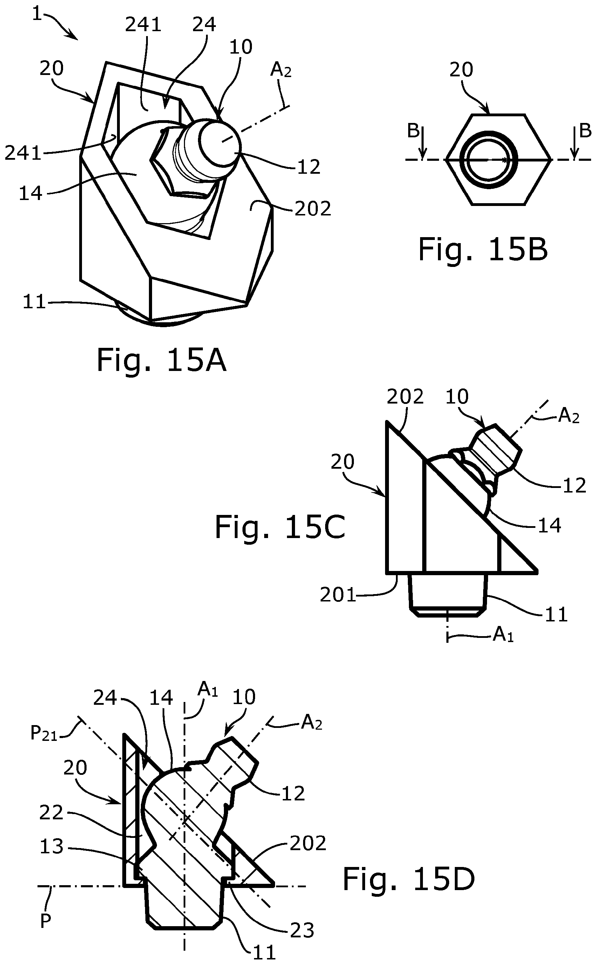

Les figures **15A, 15B, 15C** et **15D** illustrent un dispositif de raccordement de graissage **1** selon un autre mode de réalisation qui diffère essentiellement du mode de réalisation des figures **14A, 14B, 14C** et **14D** en ce que l'empreinte **24** est décentrée par rapport au contour extérieur du porte-codeur **20.** Cela permet notamment de permettre de faciliter l'accès pour un outil spécifique, tel que par exemple une clé à douille. Pour permettre cette utilisation, le décentrage de l'empreinte 24 est configuré de sorte que l'interface d'entrée de graissage **12** est décalée en position assemblée dans une position ou sa projection axiale par rapport à l'axe de fixation **A1** dans le plan de référence **P** est complètement contenue dans la projection axiale similaire du contour extérieur du porte-codeur **20.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention, tel que défini par les revendications.

## Revendications

1. Dispositif de raccordement de graissage (1) comprenant :
- un embout de graissage (10) présentant une portion de fixation (11) s'étendant suivant un axe fixation (A1), une interface d'entrée de graissage (12) s'étendant suivant un axe de graissage (A2), et une collerette (13) positionnée entre l'interface d'entrée de graissage (12) et la portion de fixation (11), la collerette (13) présentant une face inférieure (131) tournée axialement vers la portion de fixation (11), la face inférieure (131) s'étendant dans un plan de référence (P) de l'embout de graissage (10) perpendiculaire à l'axe de fixation (A1), l'interface d'entrée de graissage (12) étant configurée pour être raccordé à une source d'alimentation externe en graisse, par exemple un pistolet de graissage,
- un porte-codeur (20) portant un codeur (21) à radiofréquences configuré pour être lu par un élément de lecture extérieur correspondant,
le dispositif de raccordement (1) étant **caractérisé en ce que** le porte-codeur (20) est traversé par un trou (22) s'étendant axialement par rapport à l'axe de fixation (A1) et présentant une portée (23) contre laquelle vient en butée la face inférieure (131) de la collerette (13) de l'embout de graissage (10), le porte-codeur (20) présentant une empreinte (24) dans laquelle vient se loger la collerette (13) de l'embout de graissage (10).

2. Dispositif de raccordement de graissage (1) selon la revendication 1, **caractérisé en ce que** la collerette (13) de l'embout de graissage (10) est logée dans l'empreinte (24) du porte-codeur (20) en étant en prise avec ladite empreinte (24) pour permettre la transmission d'un couple autour de l'axe de fixation (A1).

3. Dispositif de raccordement de graissage (1) selon la revendication 1 ou 2, **caractérisé en ce que** le codeur (21) à radiofréquences comporte une antenne (21') reliée de préférence à une puce, une partie au moins de l'antenne (21') étant positionnée à distance du plan de référence (P), d'un côté du plan de référence orienté vers l'interface d'entrée de graissage (12).

4. Dispositif de raccordement de graissage (1) selon la revendication 3, **caractérisé en ce que** l'antenne (21') est positionnée autour de l'axe de graissage (A2), de préférence l'entoure, dans un plan d'antenne (P21) perpendiculaire à l'axe de graissage (A2).

5. Dispositif de raccordement de graissage (1) selon l'une quelconque des revendications précédentes, **caractérisé en ce que** la collerette (13) de l'embout de graissage (10) présente une périphérie de forme non circulaire, par exemple polygonale, de préférence hexagonale.

6. Dispositif de raccordement de graissage (1) selon l'une quelconque des revendications précédentes, **caractérisé en ce que** l'empreinte (24) est délimitée radialement par une paroi latérale (240) présentant un contour fermé comportant au moins deux faces (241), par exemple six faces (241), une partie au moins des faces (241), de préférence chacune des faces (241), présentant de préférence une surface convexe.

7. Dispositif de raccordement de graissage (1) selon la revendication 6, **caractérisé en ce que** des génératrices de toutes ou partie des faces (241), de préférence toutes les faces (241), de la paroi latérale (240) de l'empreinte (24) forment des portions paraboloïdes, notamment de sphère.

8. Dispositif de raccordement de graissage (1) selon l'une quelconque des revendications précédentes, **caractérisé en ce que** l'empreinte (24) du porte-codeur (20) s'étend axialement suivant l'axe de fixation (A1) et présente des sections transversales constantes ou d'aire croissant avec l'éloignement par rapport au plan de référence (P).

9. Dispositif de raccordement de graissage (1) selon l'une quelconque des revendications précédentes, **caractérisé en ce que** la portée (23) du porte-codeur (20) présente une épaisseur (e) définie par la distance entre le plan de référence (P) et une face intérieure (201) du porte-codeur (20), située d'un côté du plan de référence (P) opposé à l'empreinte (24), et tournée axialement dans le même sens que la face inférieure (131) de la collerette (13), l'épaisseur (e) de la portée (23) étant inférieure à 50%, de préférence inférieure à 20%, d'une distance moyenne entre le codeur (21) à radiofréquences et le plan de référence (P).

10. Dispositif de raccordement de graissage (1) selon l'une quelconque des revendications précédentes, **caractérisé en ce que** l'axe de graissage (A2) est colinéaire à l'axe de fixation (A1).

11. Dispositif de raccordement de graissage (1) selon l'une quelconque des revendications 1 à 9, **caractérisé en ce que** l'embout de graissage (10) est coudé de sorte que l'axe de graissage (A2) forme un angle avec l'axe de fixation (A1).

12. Dispositif de raccordement de graissage (1) selon l'une quelconque des revendications précédentes, **caractérisé en ce que** le porte-codeur (20) présente une interface configurée pour être en prise avec un outillage adapté pour lui appliquer un couple autour de l'axe de fixation (A1).

13. Dispositif de raccordement de graissage (1) selon l'une quelconque des revendications précédentes, **caractérisé en ce que** l'embout de graissage (10) est monobloc.

14. Dispositif de raccordement de graissage (1) selon l'une quelconque des revendications précédentes, **caractérisé en ce que** le porte-codeur (20) est monobloc.

15. Dispositif de raccordement de graissage (1) selon l'une quelconque des revendications précédentes, **caractérisé en ce que** le codeur (21) à radiofréquences est au moins partiellement en prise dans la matière constitutive du porte-codeur (20).

## Patentansprüche

1. Schmieranschlussvorrichtung (1), umfassend:
- einen Schmiernippel (10) mit einem Befestigungsabschnitt (11), der sich entlang einer Befestigungsachse (A1) erstreckt, einer Schmiermitteleintrittsschnittstelle (12), die sich entlang einer Schmiermittelachse (A2) erstreckt, und einem Flansch (13), der zwischen der Schmiermitteleintrittsschnittstelle (12) und dem Befestigungsabschnitt (11) positioniert ist, wobei der Flansch (13) eine Unterseite (131) aufweist, die axial dem Befestigungsabschnitt (11) zugewandt ist, wobei sich die Unterseite (131) in einer Bezugsebene (P) des Schmiernippels (10) senkrecht zur Befestigungsachse (A1) erstreckt, wobei die Schmiermitteleintrittsschnittstelle (12) so konfiguriert ist, dass sie mit einer externen Fettversorgungsquelle, beispielsweise einer Schmierpistole, verbunden werden kann,
- einen Kodierhalter (20), der einen Hochfrequenzcodierer (21) trägt, der so konfiguriert ist, dass er von einem entsprechenden externen Leseelement gelesen werden kann,
wobei die Verbindungsvorrichtung (1) **dadurch gekennzeichnet ist, dass** der Kodierhalter (20) von einem Loch (22) durchquert wird, das sich axial in Bezug auf die Befestigungsachse (A1) erstreckt und eine Auflagefläche (23) aufweist, gegen die die Unterseite (131) des Flansches (13) des Schmiernippels (10) anschlägt, wobei der Kodierhalter (20) eine Vertiefung (24) aufweist, in der der Flansch (13) des Schmiernippels (10) aufgenommen wird.

2. Schmieranschlussvorrichtung (1) nach Anspruch 1,
**dadurch gekennzeichnet, dass** der Flansch (13) des Schmiernippels (10) in der Vertiefung (24) des Kodierhalters (20) untergebracht ist, indem er mit der Vertiefung (24) in Eingriff steht, um die Übertragung eines Drehmoments um die Befestigungsachse (A1) zu ermöglichen.

3. Schmiermittelanschlussvorrichtung (1) nach Anspruch 1 oder 2,
**dadurch gekennzeichnet, dass** der Hochfrequenzcodierer (21) eine Antenne (21') umfasst, die vorzugsweise mit einem Chip verbunden ist, wobei zumindest ein Teil der Antenne (21') in einem Abstand von der Referenzebene (P) positioniert ist, und zwar auf einer Seite der Referenzebene, die zur Schmiermitteleintrittsschnittstelle (12) hin gerichtet ist.

4. Schmiermittelanschlussvorrichtung (1) nach Anspruch 3,
**dadurch gekennzeichnet, dass** die Antenne (21') um die Schmierachse (A2) herum positioniert ist, vorzugsweise diese umgibt, in einer Antennenebene (P21) senkrecht zur Schmierachse (A2).

5. Schmiermittelanschlussvorrichtung (1) nach einem der vorhergehenden Ansprüche, **dadurch gekennzeichnet, dass** der Flansch (13) des Schmiernippels (10) einen nicht kreisförmigen, beispielsweise polygonalen, vorzugsweise hexagonalen Umfang aufweist.

6. Schmiermittelanschlussvorrichtung (1) nach einem der vorhergehenden Ansprüche, **dadurch gekennzeichnet, dass** die Vertiefung (24) radial durch eine Seitenwand (240) begrenzt ist, die eine geschlossene Kontur mit mindestens zwei Flächen (241), beispielsweise sechs Flächen (241), aufweist, wobei mindestens ein Teil der Flächen (241), vorzugsweise jede der Flächen (241), vorzugsweise eine konvexe Oberfläche aufweist.

7. Schmiermittelanschlussvorrichtung (1) nach Anspruch 6,
**dadurch gekennzeichnet, dass** Mantellinien aller oder eines Teils der Flächen (241), vorzugsweise aller Flächen (241), der Seitenwand (240) der Vertiefung (24) paraboloide, insbesondere kugelförmige, Abschnitte bilden.

8. Schmiermittelanschlussvorrichtung (1) nach einem der vorhergehenden Ansprüche, **dadurch gekennzeichnet, dass** sich die Vertiefung (24) des Kodierhalters (20) axial entlang der Befestigungsachse (A1) erstreckt und konstante Querschnitte oder Querschnittsflächen aufweist, die mit zunehmender Entfernung von der Referenzebene (P) zunehmen.

9. Schmiermittelanschlussvorrichtung (1) nach einem der vorhergehenden Ansprüche, **dadurch gekennzeichnet, dass** die Auflagefläche (23) des Kodierhalters (20) eine Dicke (e) aufweist, die durch den Abstand zwischen der Referenzebene (P) und einer Innenseite (201) des Kodierhalters (20) definiert ist, die sich auf einer Seite der Bezugsebene (P) gegenüber der Vertiefung (24) befindet und axial in die gleiche Richtung wie die Unterseite (131) des Flansches (13) gedreht ist, wobei die Dicke (e) der Auflagefläche (23) weniger als 50 %, vorzugsweise weniger als 20 %, eines mittleren Abstands zwischen dem Hochfrequenzcodierer (21) und der Bezugsebene (P) beträgt.

10. Schmiermittelanschlussvorrichtung (1) nach einem der vorhergehenden Ansprüche, **dadurch gekennzeichnet, dass** die Schmierachse (A2) kollinear mit der Befestigungsachse (A1) ist.

11. Schmiermittelanschlussvorrichtung (1) nach einem der Ansprüche 1 bis 9, **dadurch gekennzeichnet, dass** der Schmiernippel (10) so abgewinkelt ist, dass die Schmierachse (A2) einen Winkel mit der Befestigungsachse (A1) bildet.

12. Schmiermittelanschlussvorrichtung (1) nach einem der vorhergehenden Ansprüche, **dadurch gekennzeichnet, dass** der Kodierhalter (20) eine Schnittstelle aufweist, die so konfiguriert ist, dass sie mit einem Werkzeug in Eingriff kommt, das dazu geeignet ist, ein Drehmoment um die Befestigungsachse (A1) auf sie auszuüben.

13. Schmiermittelanschlussvorrichtung (1) nach einem der vorhergehenden Ansprüche, **dadurch gekennzeichnet, dass** der Schmiernippel (10) einstückig ist.

14. Schmiermittelanschlussvorrichtung (1) nach einem der vorhergehenden Ansprüche, **dadurch gekennzeichnet, dass** der Kodierhalter (20) einstückig ist.

15. Schmiermittelanschlussvorrichtung (1) nach einem der vorhergehenden Ansprüche, **dadurch gekennzeichnet, dass** der Hochfrequenzcodierer (21) zumindest teilweise in das Material eingreift, aus dem der Kodierhalter (20) besteht.

## Claims

1. A lubricating connecting device (1) comprising:
- a grease nipple (10) having a fixing portion (11) extending along a fixing axis (A1), a grease inlet interface (12) extending along a lubricating axis (A2), and a flange (13) positioned between the grease inlet interface (12) and the fixing portion (11), the flange (13) having a lower face (131) facing axially toward the fixing portion (11), the lower face (131) extending in a reference plane (P) of the grease nipple (10) perpendicular to the fixing axis (A1), the grease inlet interface (12) being configured to be connected to an external source for supplying grease, for example a grease gun,
- an encoder holder (20) holding a radiofrequency encoder (21) configured to be read by a corresponding exterior reading element,
the connecting device (1) being **characterized in that** the encoder holder (20) is passed through by a hole (22) extending axially with respect to the fixing axis (A1) and having a bearing surface (23) against which the lower face (131) of the flange (13) of the grease nipple (10) comes to bear, the encoder holder (20) having an impression (24) in which the flange (13) of the grease nipple (10) becomes housed.

2. The lubricating connecting device (1) according to claim 1,
**characterized in that** the flange (13) of the grease nipple (10) is housed in the impression (24) of the encoder holder (20) by being engaged with said impression (24) to allow transmission of a torque about the fixing axis (A1).

3. The lubricating connection device (1) according to claim 1 or 2,
**characterized in that** the radiofrequency encoder (21) comprises an antenna (21') which is preferably connected to a chip, at least part of the antenna (21') being positioned at a distance from the reference plane (P), on one side of the reference plane oriented toward the grease inlet interface (12).

4. The lubricating connecting device (1) according to claim 3,
**characterized in that** the antenna (21') is positioned around the lubricating axis (A2), preferably surrounds it, in an antenna plane (P21) perpendicular to the lubricating axis (A2).

5. The lubricating connecting device (1) according to any of the preceding claims, **characterized in that** the flange (13) of the grease nipple (10) has a periphery of non-circular shape, for example polygonal, preferably hexagonal.

6. The lubricating connecting device (1) according to any of the preceding claims, **characterized in that** the impression (24) is delimited radially by a lateral wall (240) having a closed contour comprising at least two faces (241), for example six faces (241), at least some of the faces (241), preferably each of the faces (241), preferably having a convex surface.

7. The lubricating connecting device (1) according to claim 6,
**characterized in that** generatrices of all or some of the faces (241), preferably all the faces (241), of the lateral wall (240) of the impression (24) form paraboloid portions, in particular of spheres.

8. The lubricating connecting device (1) according to any of the preceding claims, **characterized in that** the impression (24) of the encoder holder (20) extends axially along the fixing axis (A1) and has cross sections which are constant or of which the area increases with the distance from the reference plane (P).

9. The lubricating connecting device (1) according to any of the preceding claims, **characterized in that** the bearing surface (23) of the encoder holder (20) has a thickness (e) defined by the distance between the reference plane (P) and an interior face (201) of the encoder holder (20), located on one side of the reference plane (P) opposite the impression (24), and facing axially in the same direction as the lower face (131) of the flange (13), the thickness (e) of the bearing surface (23) being less than 50%, preferably less than 20%, of an average distance between the radiofrequency encoder (21) and the reference plane (P).

10. The lubricating connecting device (1) according to any of the preceding claims, **characterized in that** the lubricating axis (A2) is collinear to the fixing axis (A1).

11. The lubricating connecting device (1) according to any of claims 1 to 9,
**characterized in that** the grease nipple (10) is bent so that the lubricating axis (A2) forms an angle with the fixing axis (A1).

12. The lubricating connecting device (1) according to any of the preceding claims, **characterized in that** the encoder holder (20) has an interface configured to be engaged with a tool suitable to apply a torque thereto about the fixing axis (A1).

13. The lubricating connecting device (1) according to any of the preceding claims, **characterized in that** the grease nipple (10) is made of a single piece.

14. The lubricating connecting device (1) according to any of the preceding claims, **characterized in that** the encoder holder (20) is made of a single piece.

15. The lubricating connecting device (1) according to any of the preceding claims, **characterized in that** the radiofrequency encoder (21) is at least partially engaged in the constituent material of the encoder holder (20).
